# EUROPEAN PATENT SPECIFICATION

(11) **EP 4 296 154 B1**
(45) Date of publication and mention of the grant of the patent: **06.05.2026**
(21) Application number: 21926193.0
(22) Date of filing: 04.03.2021
(51) Int. Cl.: B63B 1/38

(54) **GAS SUPPLY SYSTEM APPLICABLE TO GAS LAYER DRAG REDUCTION SHIP, AND SHIP**
GASVERSORGUNGSSYSTEM FÜR EIN LUFTWIDERSTANDSREDUZIERENDES GASSCHICHTSCHIFF UND SCHIFF
SYSTÈME D'ALIMENTATION EN GAZ APPLICABLE À UN NAVIRE À RÉDUCTION DE TRAINÉE À COUCHE DE GAZ, ET NAVIRE

(30) Priority: 19.02.2021 CN 202110195731
(43) Date of publication of application: 27.12.2023
(73) Proprietor: CSSC Shanghai Marine Energy Saving Technology co., Ltd., Shanghai 200011 (CN)
(72) Inventor: XIA, Haochao, Shanghai 200011 (CN); GAO, Lijin, Shanghai 200011 (CN); CHEN, Shaofeng, Shanghai 200011 (CN); YUN, Qiuqin, Shanghai 200011 (CN); WU, Zan, Shanghai 200011 (CN); HUANG, Guofu, Shanghai 200011 (CN); HUANG, Shuquan, Shanghai 200011 (CN)
(74) Representative: Leihkauf, Steffen Falk
(86) International application number: PCT/CN2021/079052
(87) International publication number: WO 2022/174476

(56) References cited:
- EP-B1- 3 162 690
- WO-A1-2012/114840
- WO-A1-2013/002182
- WO-A1-2018/168585
- CN-A- 104 903 185
- CN-A- 106 458 290
- CN-A- 106 660 612
- CN-A- 110 949 603
- JP-A- S62 286 886
- KR-B1- 101 690 990

## Description

### TECHNICAL FIELD

The present application relates to the technical field of air layer drag reduction ships, for example, an air supply system applicable to an air layer drag reduction ship and a ship.

### BACKGROUND

An air layer drag reduction system of a ship includes subsystems, such as air supply, pressure stabilization, air injection, control. An air supply system uses multiple air compressors for air supply. When the number of air compressors is relatively large, the multiple air compressors interfere with each other, complex pipeline structures affect each other, and a pipeline connection has a relatively great loss, resulting in the unstable output of the air supply system and an unstable gas in a pipeline. Meanwhile, a conventional low-pressure air compressor, such as an oil-free screw air compressor, discharges a gas with a relatively high temperature which can reach more than 100 °C or even 200 °C. When a high-temperature gas runs in the pipeline, damage or danger is caused.

EP 3 162 690 B discloses an example of an air layer drag reduction system of a ship.

### SUMMARY

The present application provides an air supply system applicable to an air layer drag reduction ship and a ship to connect air compressors, stabilize output air, and reduce the temperature of the output air, thereby improving the applicability and stability of the air supply system.

An air supply system as claimed applicable to an air layer drag reduction ship is provided. The air supply system includes an air tank and a cooling assembly.

The air tank is provided with an air outlet pipeline and multiple air inlet pipelines, where the air outlet pipeline and the multiple air inlet pipelines are each provided with a first monitoring assembly and a first remote control valve, the first monitoring assembly is configured to monitor a temperature, pressure, and a flow of air in the air outlet pipeline or one of the multiple air inlet pipelines corresponding to the first monitoring assembly, and the first remote control valve is configured to control an air flow through the air outlet pipeline or one of the multiple air inlet pipelines corresponding to the first remote control valve.

The cooling assembly is disposed inside the air tank and configured to reduce a temperature of air in the air tank; where the cooling assembly includes a liquid inlet pipe and a liquid outlet pipe, the liquid outlet pipe is provided with a second monitoring assembly, the second monitoring assembly is configured to monitor a temperature and a flow of a fluid in the liquid outlet pipe, the liquid inlet pipe is provided with a second remote control valve, the second monitoring assembly and the first monitoring assembly are communicatively connected to the second remote control valve, and the second remote control valve is configured to control a liquid flow through the liquid inlet pipe according to monitoring results of the second monitoring assembly and the first monitoring assembly.

A ship including the preceding air supply system is further provided.

### BRIEF DESCRIPTION OF DRAWINGS

FIG. 1 is a structural diagram of an air supply system according to an embodiment of the present application.
FIG. 2 is a sectional view of an air tank according to an embodiment of the present application.
FIG. 3 is a cross-sectional view of an air tank according to an embodiment of the present application.
FIG. 4 is a diagram of control principles of an air supply system according to an embodiment of the present application.
FIG. 5 is a schematic diagram of a mounting manner of a baffle plate according to an embodiment of the present application.
FIG. 6 is a structural diagram of a tank body of an air tank according to an embodiment of the present application.
FIG. 7 is a structural diagram of a ship according to an embodiment of the present application.
FIG. 8 is a structural diagram of another ship according to an embodiment of the present application.

### Reference list

- 1: air tank
- 11: air inlet pipeline
- 12: air outlet pipeline
- 13: first monitoring assembly
- 131: first temperature sensor
- 132: first pressure sensor
- 133: first flow sensor
- 14: first remote control valve
- 15: baffle plate
- 16: inner wall
- 17: outer wall
- 18: third cooling coil
- 19: heat sink fin
- 2: cooling assembly
- 21: liquid inlet pipe
- 211: second remote control valve
- 22: liquid outlet pipe
- 221: second monitoring assembly
- 2211: second temperature sensor
- 2212: second flow sensor
- 23: first cooling coil
- 24: second cooling coil
- 3: air compressor

### DETAILED DESCRIPTION

Hereinafter technical solutions in embodiments of the present application are described in conjunction with the drawings in the embodiments of the present application. Generally, components of embodiments of the present application described and illustrated in the drawings may be arranged and designed through various configurations.

Similar reference numerals and letters indicate similar items in the drawings. Therefore, once an item is defined in one drawing, the item no longer needs to be defined and explained in subsequent drawings.

In the description of the present application, orientations or position relations indicated by terms such as "upper", "lower", "left", "right", "vertical", "horizontal", "in", and "out" are based on the drawings or those of the product of the present application usually placed during use. These orientations or position relations are intended only to facilitate and simplify the description of the present application and not to indicate or imply that a device or element referred to must have such particular orientations or must be configured or operated in such particular orientations. Thus, these orientations or position relations are not to be construed as limiting the present application. Moreover, terms such as "first", "second", and "third" are used only for distinguishing description and are not to be construed as indicating or implying relative importance. In the description of the present application, unless otherwise noted, the term "a plurality of" or "multiple" means two or more.

In the description of the present application, terms "disposed" and "connected" are to be understood in a broad sense unless otherwise specified and limited. For example, the term "connected" may refer to "securely connected", "detachably connected", or "integrally connected" or may refer to "mechanically connected" or "electrically connected". Meanings of the preceding terms in the present application may be understood based on specific situations.

In the present application, unless otherwise specified and limited, when a first feature is described as "on" or "under" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

The embodiments of the present application are described below. Examples of the embodiments are shown in the drawings, where the same or similar reference numerals indicate the same or similar elements or elements having the same or similar functions.

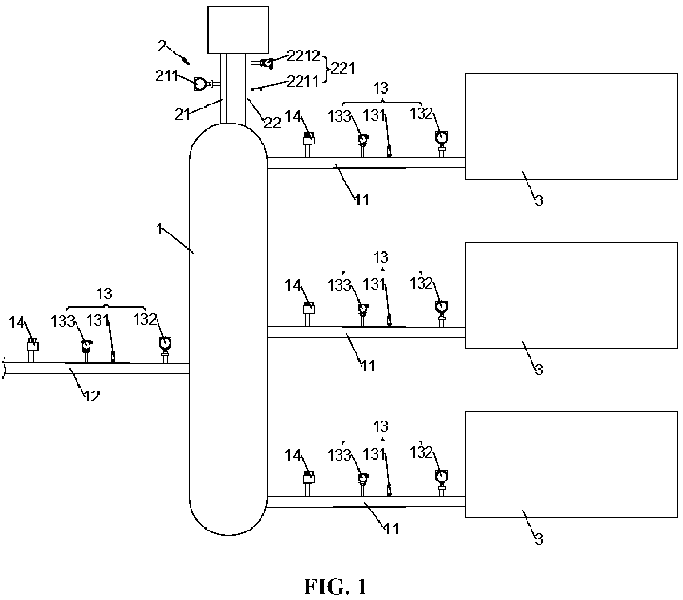

As shown in FIG. 1, this embodiment provides an air supply system applicable to an air layer drag reduction ship, and the air supply system includes an air tank 1 and a cooling assembly 2. The air tank 1 is provided with an air outlet pipeline 12 and multiple air inlet pipelines 11, the air outlet pipeline 12 and each air inlet pipeline 11 are provided with a first monitoring assembly 13 and a first remote control valve 14, multiple first monitoring assemblies 13 can monitor the temperature, pressure, and flow of air in the corresponding air outlet pipeline 12 and air inlet pipelines 11, and multiple first remote control valves 14 can control air flows through the air outlet pipeline 12 and the air inlet pipelines 11, respectively; the cooling assembly 2 is disposed inside the air tank 1 and can reduce the temperature of air in the air tank 1; and the cooling assembly 2 includes a liquid inlet pipe 21 and a liquid outlet pipe 22, the liquid outlet pipe 22 is provided with a second monitoring assembly 221, the second monitoring assembly 221 can monitor the temperature and the flow of a fluid in the liquid outlet pipe 22, the liquid inlet pipe 21 is provided with a second remote control valve 211, the second monitoring assembly 221 and each first monitoring assembly 13 are communicatively connected to the second remote control valve 211, and the second remote control valve 211 can control a liquid flow through the liquid inlet pipe 21 according to monitoring results of the second monitoring assembly 221 and each first monitoring assembly 13.

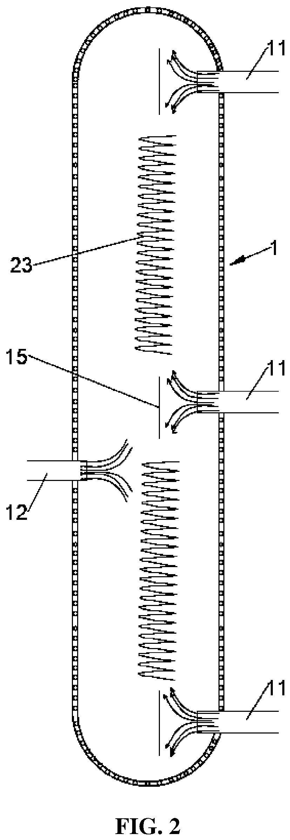

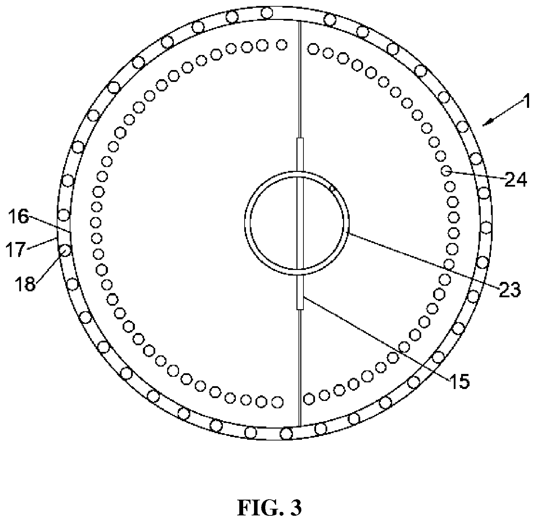

As shown in FIGS. 2 and 3, in this embodiment, liquid cooling is used for lowering the temperature, and a cooling liquid is, but not limited to, any one of fresh water, seawater, or oil. A tank wall of the air tank 1 includes an inner wall 16 and an outer wall 17, a third cooling coil 18 is disposed between the inner wall 16 and the outer wall 17, and the third cooling coil 18 includes an end communicating with the liquid inlet pipe 21 and the other end communicating with the liquid outlet pipe 22. The air tank 1 is an elongated cylindrical tank body, and the volume of the air tank 1 is determined according to requirements on an air flow required for operation of the air supply system configured for a ship and the temperature of output air.

In an embodiment, multiple air outlet pipelines 12 may be provided.

The air supply system may also include multiple air compressors 3 corresponding to the multiple air inlet pipelines 11 one to one, where an end of the air inlet pipeline 11 is connected to the corresponding air compressor 3.

In this embodiment, the designed air tank 1 and connection form are used, as a buffer module between the air compressors 3 and an air transportation pipeline, to connect the air compressors 3, stabilize the output air, adjust an air supply form, and reduce the temperature of the output air, thereby improving the applicability and stability of the air supply system. The liquid outlet pipe 22 and the air outlet pipeline 12 are monitored in real time so that whether to add the cooling liquid from the outside and a flow rate at which the cooling liquid is added are carefully adjusted, so as to provide air with a suitable temperature and save energy.

In this embodiment, three air inlet pipelines 11 are provided. Each air inlet pipeline 11 includes an end connected to one air compressor 3 and the other end communicating with the inside of the air tank 1. The air tank 1 is used as a buffer module between the air compressors 3 and the air outlet pipeline 12 to connect the air compressors 3, stabilize the output air, and reduce the temperature of the output air, thereby improving the applicability and stability of the air supply system. The air inlet pipelines 11 and the air outlet pipeline 12 are disposed on two sides of the air tank 1 respectively so that the air enters the air tank 1 through the air inlet pipelines 11, fully exchanges heat with the cooling assembly 2, and then is discharged out of the air tank 1 through the air outlet pipeline 12.

The cooling assembly 2 may include multiple first cooling coils 23, the first cooling coil 23 is disposed between every two adjacent air inlet pipelines 11, each first cooling coil 23 extends along a length direction of the air tank 1, and the first cooling coil 23 has an end communicating with the liquid inlet pipe 21 and the other end communicating with the liquid outlet pipe 22. The first cooling coil 23 is disposed at the center of the air tank 1, is in the shape of a helix, and extends along the length direction of the air tank 1.

The cooling assembly 2 may also include a second cooling coil 24 disposed along the inner wall 16 of the air tank 1. The second cooling coil 24 includes an end communicating with the liquid inlet pipe 21 and the other end communicating with the liquid outlet pipe 22. The second cooling coil 24 is wound along the inner wall 16 of the air tank 1 to surround the air in the air tank 1 and provides a better cooling effect in conjunction with the first cooling coils 23 at the center of the air tank 1.

The air supply system also includes a cooling liquid circulation device. The cooling liquid enters the first cooling coil 23, the second cooling coil 24, and the third cooling coil 18 through the liquid inlet pipe 21, is circulated, and returns to the cooling liquid circulation device through the liquid outlet pipe 22 for reuse.

The first monitoring assembly 13 includes a first temperature sensor 131, a first pressure sensor 132, and a first flow sensor 133 for monitoring the temperature, the pressure, and the flow of the air in the corresponding air outlet pipeline 12 or air inlet pipeline 11, respectively.

The second monitoring assembly 221 includes a second temperature sensor 2211 and a second flow sensor 2212 for monitoring the temperature and the flow of the fluid in the liquid outlet pipe 22, respectively.

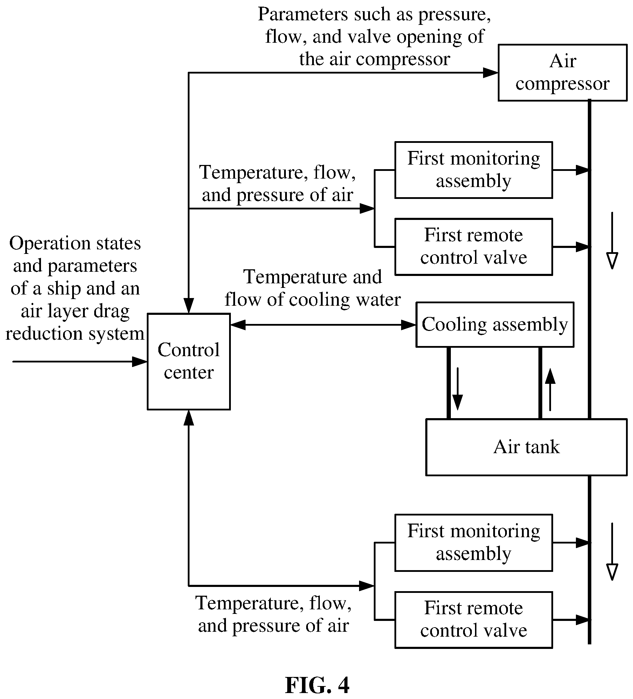

As shown in FIG. 4, a thin solid line represents a signal transmission route, a thick solid line represents a pipeline, an open-headed arrow represents a flow direction of air, and a solid arrow represents a flow direction of the cooling liquid. The air supply system also includes a control center, where the air compressor 3, the first remote control valve 14, the second remote control valve 211, the first temperature sensor 131, the first pressure sensor 132, the first flow sensor 133, the second temperature sensor 2211, and the second flow sensor 2212 are all communicatively connected to the control center. The control center can control each first remote control valve 14 to turn on or off and control an opening of the first remote control valve 14 to control the air flow through the corresponding air outlet pipeline 12 or air inlet pipeline 11. The control center can control the second remote control valve 211 to turn on or off according to the monitoring results of the second monitoring assembly 221 and each first monitoring assembly 13, and can control an opening of the second remote control valve 211 to control the liquid flow through the liquid inlet pipe 21.

When the ship is fully loaded, the control center controls all three air compressors 3 to turn on and controls rotational speeds of the air compressors 3. The air compressors 3 discharge air with certain pressure and a certain flow. The control center detects the flow and the temperature of air discharged from the air compressor 3 through the first monitoring assembly 13 on each of the three air inlet pipelines 11, calculates the flow and temperature of intake air, and controls an amount and a flow rate of the cooling liquid through the second remote control valve 211. When the ship is in ballast, the control center turns only one air compressor 3 on to reduce the flow and then controls the second remote control valve 211 to reduce the opening of the second remote control valve 211 so that the amount and the flow rate of the cooling liquid can be reduced. After an air layer drag reduction system of the ship operates for a long term, the required flow decreases, one or two air compressors 3 may be turned off to reduce the air flow, and then the second remote control valve 211 is controlled to reduce the opening of the second remote control valve 211 so that the amount and the flow rate of the cooling liquid are reduced, thereby reducing an energy loss. When the air compressor 3 is turned off, the first remote control valve 14 on the corresponding air inlet pipeline 11 is also turned off, so as to prevent the backflow of air.

The control center monitors the temperature, flow, and pressure of air in the air outlet pipeline 12 through the first monitoring assembly 13 on the air outlet pipeline 12, monitors the temperature and the flow of the returning cooling waste liquid through the second monitoring assembly 221 on the liquid outlet pipe 22, and controls, according to monitoring results, the second remote control valve 211 to turn on or off or increase or decrease the opening, so as to adjust the flow rate at which the cooling liquid enters and adjust a cooling capability. When it is monitored that the temperature of the air in the air outlet pipeline 12 is relatively high, the opening of the second remote control valve 211 is increased, so as to increase the amount and the flow rate of the cooling liquid, improve the cooling capability of the cooling assembly 2, and rapidly cool the air in the air tank 1. When it is monitored that the temperature of the air in the air outlet pipeline 12 is relatively low, the opening of the second remote control valve 211 is decreased, so as to reduce the amount and the flow rate of the cooling liquid and reduce the energy loss.

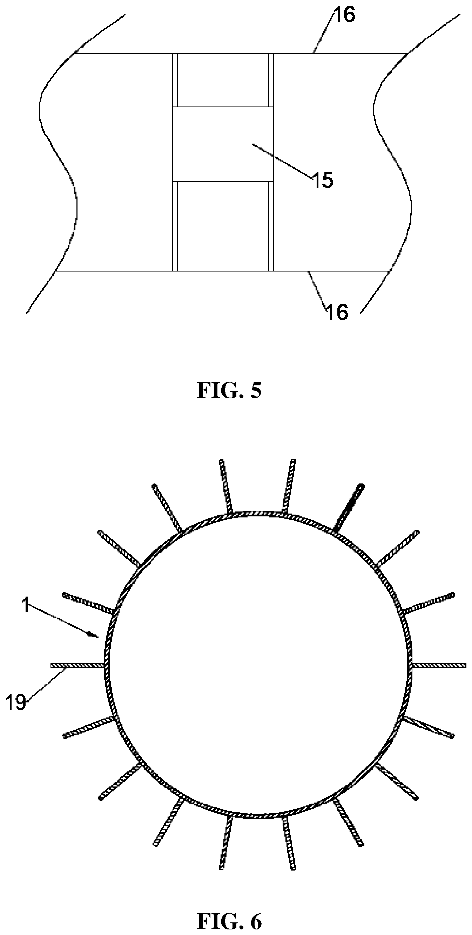

As shown in FIG. 5, multiple baffle plates 15 are provided inside the air tank 1, the multiple baffle plates 15 correspond to the multiple air inlet pipelines 11 one to one, and the baffle plate 15 is disposed directly in front of an air outlet end of the air inlet pipeline 11. The baffle plate 15 is disposed opposite the air outlet end of the air inlet pipeline 11 and is a rectangular or square plate. The baffle plate 15 is connected to the inner wall 16 of the air tank 1 through a reinforcing support structure to ensure structural strength and safety of the baffle plate 15. A certain gap exists between the baffle plate 15 and the air outlet end of the air inlet pipeline 11 so that air collides with the baffle plate 15, so as to buffer the air and stabilize the pressure of the air. Meanwhile, the air is dispersed so that the air is uniformly in contact with the first cooling coil 23 and the second cooling coil 24 for heat exchange.

As shown in FIG. 6, in other embodiments, air cooling is used, and multiple heat sink fins 19 are provided on an outer side of the tank wall of the air tank 1. The heat sink fins 19 are each in the shape of an elongated strip and extend along the length direction of the air tank 1. The multiple heat sink fins 19 are uniformly arranged along a circumferential direction of the air tank 1, thereby ensuring that the air in the air tank 1 is uniformly cooled.

This embodiment further provides a ship including the preceding air supply system. The preceding air supply system is used to avoid mutual interference between multiple air compressors, stabilize air in a pipeline, prolong the service life of the pipeline, and ensure the normal operation of the ship.

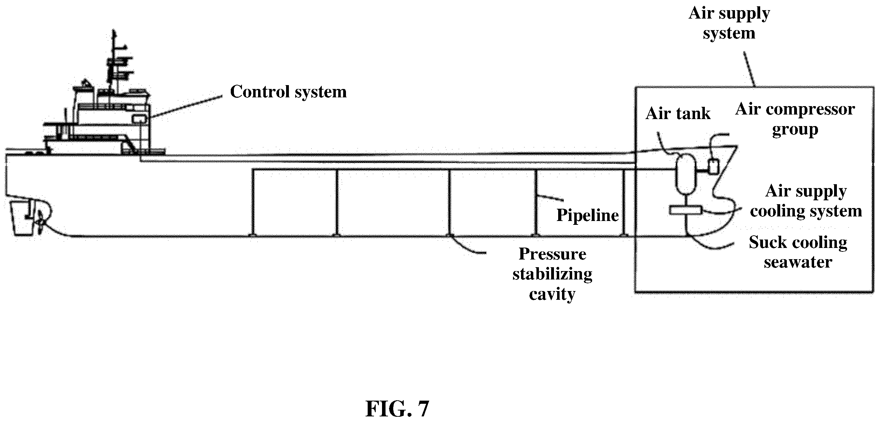

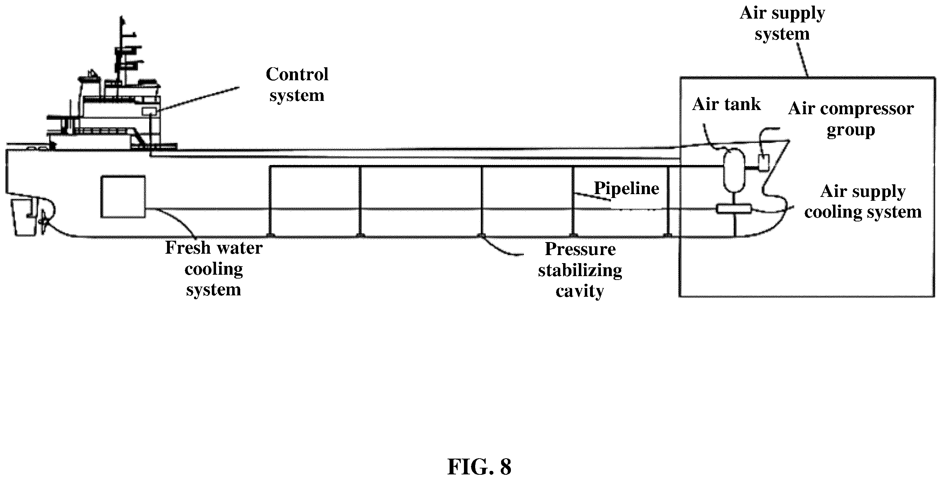

FIG. 7 is a structural diagram of a ship according to an embodiment of the present application. FIG. 7 shows a position of the air supply system in air layer drag reduction of the whole ship, and a cooling system can perform cooling directly by sucking seawater. FIG. 8 is a structural diagram of another ship according to an embodiment of the present application. FIG. 8 shows the position of the air supply system in the air layer drag reduction of the whole ship, and the cooling system can perform cooling by using fresh water stored in the ship.

## Claims

1. An air supply system, applicable to an air layer drag reduction ship, comprising:
an air tank (1) provided with an air outlet pipeline (12) and a plurality of air inlet pipelines (11),
wherein the air outlet pipeline (12) and the plurality of air inlet pipelines (11) are each provided with a first monitoring assembly (13) and a first remote control valve (14), the first monitoring assembly (13) is configured to monitor a temperature, pressure, and a flow of air in the air outlet pipeline (12) or one of the plurality of air inlet pipelines (11) corresponding to the first monitoring assembly (13), and the first remote control valve (14) is configured to control an air flow through the air outlet pipeline (12) or one of the plurality of air inlet pipelines (11) corresponding to the first remote control valve (14); **characterised by**
a cooling assembly (2) disposed inside the air tank (1) and configured to reduce a temperature of air in the air tank (1); wherein the cooling assembly (2) comprises a liquid inlet pipe (21) and a liquid outlet pipe (22), the liquid outlet pipe (22) is provided with a second monitoring assembly (221), the second monitoring assembly (221) is configured to monitor a temperature and a flow of a fluid in the liquid outlet pipe (22), the liquid inlet pipe (21) is provided with a second remote control valve (211), the second monitoring assembly (221) and the first monitoring assembly (13) are communicatively connected to the second remote control valve (211), and the second remote control valve (211) is configured to control a liquid flow through the liquid inlet pipe (21) according to monitoring results of the second monitoring assembly (221) and the first monitoring assembly (13).

2. The air supply system according to claim 1, wherein a plurality of baffle plates (15) are provided inside the air tank (1), the plurality of baffle plates (15) correspond to the plurality of air inlet pipelines (11) one to one, and each baffle plate (15) of the plurality of baffle plates (15) is disposed directly in front of an air outlet end of a corresponding one of the plurality of air inlet pipelines (11).

3. The air supply system according to claim 1, wherein the cooling assembly (2) further comprises a plurality of first cooling coils (23), one of the plurality of first cooling coils (23) is disposed between every two adjacent air inlet pipelines (11), each of the plurality of first cooling coils (23) extends along a length direction of the air tank (1), and each of the plurality of first cooling coils (23) has an end communicating with the liquid inlet pipe (21) and another end communicating with the liquid outlet pipe (22).

4. The air supply system according to claim 1, wherein the cooling assembly (2) further comprises a second cooling coil (24) disposed along an inner wall (16) of the air tank (1), wherein the second cooling coil (24) comprises an end communicating with the liquid inlet pipe (21) and another end communicating with the liquid outlet pipe (22).

5. The air supply system according to claim 1, further comprising a plurality of air compressors (3) corresponding to the plurality of air inlet pipelines (11) one to one, wherein an end of each air inlet pipeline (11) of the plurality of air inlet pipelines (11) is connected to a corresponding one of the plurality of air compressors (3).

6. The air supply system according to claim 1, wherein the first monitoring assembly (13) comprises a first temperature sensor (131), a first pressure sensor (132), and a first flow sensor (133) configured to monitor the temperature, the pressure, and the flow of the air in the air outlet pipeline (12) or one of the plurality of air inlet pipelines (11) corresponding to the first monitoring assembly (13), respectively.

7. The air supply system according to claim 1, wherein the second monitoring assembly (221) comprises a second temperature sensor (2211) and a second flow sensor (2212) configured to monitor the temperature and the flow of the fluid in the liquid outlet pipe (22).

8. The air supply system according to any one of claims 1 to 7, wherein a tank wall of the air tank (1) comprises an inner wall (16) and an outer wall (17), a third cooling coil (18) is disposed between the inner wall (16) and the outer wall (17), and the third cooling coil (18) comprises an end communicating with the liquid inlet pipe (21) and another end communicating with the liquid outlet pipe (22).

9. The air supply system according to any one of claims 1 to 7, wherein a plurality of heat sink fins (19) are provided on an outer side of a tank wall of the air tank (1).

10. A ship, comprising a pressure stabilizing cavity, and the air supply system according to any one of claims 1 to 9.

## Patentansprüche

1. Luftversorgungssystem, anwendbar für ein Schiff mit Widerstandsreduzierung durch Luftschmierung, umfassend:
einen Lufttank (1), der mit einer Luftauslassrohrleitung (12) und einer Vielzahl von Lufteinlassrohrleitungen (11) versehen ist, wobei die Luftauslassrohrleitung (12) und die Vielzahl von Lufteinlassrohrleitungen (11) jeweils mit einer ersten Überwachungsanordnung (13) und einem ersten Fernsteuerventil (14) versehen sind, die erste Überwachungsanordnung (13) ausgelegt ist, um eine Temperatur, einen Druck und einen Luftstrom in der Luftauslassrohrleitung (12) oder einer der Vielzahl von Lufteinlassrohrleitungen (11) entsprechend der ersten Überwachungsanordnung (13) zu überwachen, und das erste Fernsteuerventil (14) ausgelegt ist, um einen Luftstrom durch die Luftauslassrohrleitung (12) oder eine der Vielzahl von Lufteinlassrohrleitungen (11) entsprechend dem ersten Fernsteuerventil (14) zu steuern, **dadurch gekennzeichnet, dass**
eine Kühlanordnung (2) in dem Lufttank (1) angeordnet und ausgelegt ist, um eine Lufttemperatur in dem Lufttank (1) zu reduzieren, wobei die Kühlanordnung (2) ein Flüssigkeitseinlassrohr (21) und ein Flüssigkeitsauslassrohr (22) umfasst, das Flüssigkeitsauslassrohr (22) mit einer zweiten Überwachungsanordnung (221) versehen ist, die zweite Überwachungsanordnung (221) ausgelegt ist, um eine Temperatur und einen Strom eines Fluids in dem Flüssigkeitsauslassrohr (22) zu überwachen, das Flüssigkeitseinlassrohr (21) mit einem zweiten Fernsteuerventil (211) versehen ist, die zweite Überwachungsanordnung (221) und die erste Überwachungsanordnung (13) kommunikationswirksam mit dem zweiten Fernsteuerventil (211) verbunden sind und das zweite Fernsteuerventil (211) ausgelegt ist, um einen Flüssigkeitsstrom durch das Flüssigkeitseinlassrohr (21) gemäß den Überwachungsergebnissen der zweiten Überwachungsanordnung (221) und der ersten Überwachungsanordnung (13) zu steuern.

2. Luftversorgungssystem nach Anspruch 1, wobei eine Vielzahl von Prallblechen (15) in dem Lufttank (1) vorgesehen ist, die Vielzahl von Prallblechen (15) der Vielzahl von Lufteinlassrohrleitungen (11) eins zu eins entspricht und jedes Prallblech (15) der Vielzahl von Prallblechen (15) direkt vor einem Luftauslassende einer entsprechenden der Vielzahl von Lufteinlassrohrleitungen (11) angeordnet ist.

3. Luftversorgungssystem nach Anspruch 1, wobei die Kühlanordnung (2) ferner eine Vielzahl von ersten Kühlwendeln (23) umfasst, eine der Vielzahl von ersten Kühlwendeln (23) zwischen jeweils zwei benachbarten Lufteinlassrohrleitungen (11) angeordnet ist, sich jede der Vielzahl von ersten Kühlwendeln (23) entlang einer Längsrichtung des Lufttanks (1) erstreckt und jede der Vielzahl von ersten Kühlwendeln (23) ein Ende aufweist, das mit dem Flüssigkeitseinlassrohr (21) kommuniziert, und ein anderes Ende, das mit dem Flüssigkeitsauslassrohr (22) kommuniziert.

4. Luftversorgungssystem nach Anspruch 1, wobei die Kühlanordnung (2) ferner eine zweite Kühlwendel (24) umfasst, die entlang einer Innenwand (16) des Lufttanks (1) angeordnet ist, wobei die zweite Kühlwendel (24) ein Ende aufweist, das mit dem Flüssigkeitseinlassrohr (21) kommuniziert, und ein anderes Ende, das mit dem Flüssigkeitsauslassrohr (22) kommuniziert.

5. Luftversorgungssystem nach Anspruch 1, ferner umfassend eine Vielzahl von Luftkompressoren (3) entsprechend eins zu eins der Vielzahl von Lufteinlassrohrleitungen (11), wobei ein Ende jeder Lufteinlassrohrleitung (11) der Vielzahl von Lufteinlassrohrleitungen (11) mit einem entsprechenden der Vielzahl von Luftkompressoren (3) verbunden ist.

6. Luftversorgungssystem nach Anspruch 1, wobei die erste Überwachungsanordnung (13) einen ersten Temperatursensor (131), einen ersten Drucksensor (132) und einen ersten Durchflusssensor (133) umfasst, die ausgelegt sind, um jeweils die Temperatur, den Druck und den Durchfluss der Luft in der Luftauslassrohrleitung (12) oder einer der Vielzahl von Lufteinlassrohrleitungen (11) entsprechend der ersten Überwachungsanordnung (13) zu überwachen.

7. Luftversorgungssystem nach Anspruch 1, wobei die zweite Überwachungsanordnung (221) einen zweiten Temperatursensor (2211) und einen zweiten Durchflusssensor (2212) umfasst, die ausgelegt sind, um jeweils die Temperatur und den Durchfluss des Fluids in dem Flüssigkeitsauslassrohr (22) zu überwachen.

8. Luftversorgungssystem nach einem der Ansprüche 1 bis 7, wobei eine Tankwand des Lufttanks (1) eine Innenwand (16) und eine Außenwand (17) umfasst, eine dritte Kühlwendel (18) zwischen der Innenwand (16) und der Außenwand (17) angeordnet ist und die dritte Kühlwendel (18) ein Ende umfasst, das mit dem Flüssigkeitseinlassrohr (21) kommuniziert, und ein anderes Ende, das mit dem Flüssigkeitsauslassrohr (22) kommuniziert.

9. Luftversorgungssystem nach einem der Ansprüche 1 bis 7, wobei eine Vielzahl von Kühlkörperrippen (19) auf einer Außenseite einer Tankwand des Lufttanks (1) vorgesehen ist.

10. Schiff, umfassend einen druckstabilisierenden Hohlraum und das Luftversorgungssystem nach einem der Ansprüche 1 bis 9.

## Revendications

1. Système d'alimentation en air, applicable à un navire à réduction de traînée à lame d'air, comprenant :
un réservoir d'air (1) pourvu d'une conduite de sortie d'air (12) et d'une pluralité de conduites d'entrée d'air (11), dans lequel chacune de la conduite de sortie d'air (12) et de la pluralité de conduites d'entrée d'air (11) est pourvue d'un premier ensemble de surveillance (13) et d'une première vanne de commande à distance (14), le premier ensemble de surveillance (13) est configuré pour surveiller une température, une pression et un débit d'air dans la conduite de sortie d'air (12) ou l'une parmi la pluralité de conduites d'entrée d'air (11) correspondant au premier ensemble de surveillance (13), et la première vanne de commande à distance (14) est configurée pour commander un débit d'air à travers la conduite de sortie d'air (12) ou l'une parmi la pluralité de conduites d'entrée d'air (11) correspondant à la première vanne de commande à distance (14) ; **caractérisé par**
un ensemble de refroidissement (2) disposé à l'intérieur du réservoir d'air (1) et configuré pour réduire une température d'air dans le réservoir d'air (1) ; dans lequel l'ensemble de refroidissement (2) comprend une canalisation d'entrée de liquide (21) et une canalisation de sortie de liquide (22), la canalisation de sortie de liquide (22) est pourvue d'un deuxième ensemble de surveillance (221), le deuxième ensemble de surveillance (221) est configuré pour surveiller une température et un débit d'un fluide dans la canalisation de sortie de liquide (22), la canalisation d'entrée de liquide (21) est pourvue d'une deuxième vanne de commande à distance (211), le deuxième ensemble de surveillance (221) et le premier ensemble de surveillance (13) sont reliés en communication à la deuxième vanne de commande à distance (211), et la deuxième vanne de commande à distance (211) est configurée pour commander un débit de liquide à travers la canalisation d'entrée de liquide (21) en fonction des résultats de surveillance du deuxième ensemble de surveillance (221) et du premier ensemble de surveillance (13).

2. Système d'alimentation en air selon la revendication 1, dans lequel une pluralité de plaques déflectrices (15) est ménagée à l'intérieur du réservoir d'air (1), la pluralité de plaques déflectrices (15) correspond à la pluralité de conduites d'entrée d'air (11) de manière biunivoque, et chaque plaque déflectrice (15) de la pluralité de plaques déflectrices (15) est disposée directement devant une extrémité de sortie d'air d'une conduite correspondante parmi la pluralité de conduites d'entrée d'air (11).

3. Système d'alimentation en air selon la revendication 1, dans lequel l'ensemble de refroidissement (2) comprend en outre une pluralité de premières bobines de refroidissement (23), l'une parmi la pluralité de premières bobines de refroidissement (23) est disposée entre chaque paire de conduites d'entrée d'air adjacentes (11), chacune de la pluralité de premières bobines de refroidissement (23) s'étend le long d'une direction de longueur du réservoir d'air (1), et chacune de la pluralité de premières bobines de refroidissement (23) présente une extrémité communiquant avec la canalisation d'entrée de liquide (21) et une autre extrémité communiquant avec la canalisation de sortie de liquide (22).

4. Système d'alimentation en air selon la revendication 1, dans lequel l'ensemble de refroidissement (2) comprend en outre une deuxième bobine de refroidissement (24) disposée le long d'une paroi interne (16) du réservoir d'air (1), dans lequel la deuxième bobine de refroidissement (24) comprend une extrémité communiquant avec la canalisation d'entrée de liquide (21) et une autre extrémité communiquant avec la canalisation de sortie de liquide (22).

5. Système d'alimentation en air selon la revendication 1, comprenant en outre une pluralité de compresseurs d'air (3) correspondant à la pluralité de conduites d'entrée d'air (11) de manière biunivoque, dans lequel une extrémité de chaque conduite d'entrée d'air (11) de la pluralité de conduites d'entrée d'air (11) est reliée à un compresseur correspondant parmi la pluralité de compresseurs d'air (3).

6. Système d'alimentation en air selon la revendication 1, dans lequel le premier ensemble de surveillance (13) comprend un premier capteur de température (131), un premier capteur de pression (132), et un premier capteur de débit (133) configurés pour surveiller la température, la pression et le débit de l'air dans la conduite de sortie d'air (12) ou l'une parmi la pluralité de conduites d'entrée d'air (11) correspondant au premier ensemble de surveillance (13), respectivement.

7. Système d'alimentation en air selon la revendication 1, dans lequel le deuxième ensemble de surveillance (221) comprend un deuxième capteur de température (2211) et un deuxième capteur de débit (2212) configurés pour surveiller la température et le débit du fluide dans la canalisation de sortie de liquide (22).

8. Système d'alimentation en air selon l'une quelconque des revendications 1 à 7, dans lequel une paroi de réservoir du réservoir d'air (1) comprend une paroi interne (16) et une paroi externe (17), une troisième bobine de refroidissement (18) est disposée entre la paroi interne (16) et la paroi externe (17), et la troisième bobine de refroidissement (18) comprend une extrémité communiquant avec la canalisation d'entrée de liquide (21) et une autre extrémité communiquant avec la canalisation de sortie de liquide (22).

9. Système d'alimentation en air selon l'une quelconque des revendications 1 à 7, dans lequel une pluralité d'ailettes de dissipation de chaleur (19) sont ménagées sur un côté externe d'une paroi de réservoir du réservoir d'air (1).

10. Navire, comprenant une cavité de stabilisation de pression, et le système d'alimentation en air selon l'une quelconque des revendications 1 à 9.
